# FASCICULE DE BREVET EUROPEEN

(11) **EP 1 616 485 B1**
(45) Date de publication et mention de la délivrance du brevet: **28.02.2007**
(21) Numéro de dépôt: 05290619.5
(22) Date de dépôt: 22.03.2005
(51) Int. Cl.: A01K 97/10

(54) **Support de canne à pêche pour la pêche au poser**
Angelrutenhalter für stille Fischerei
Fishing rod holder for still fishing

(30) Priorité: 12.07.2004 FR 0407748
(43) Date de publication de la demande: 18.01.2006
(73) Titulaire: Amiaud, Anthony André Michel Luc, 85140 Saint Martin des Noyers (FR)
(72) Inventeur: Amiaud, Anthony André Michel Luc, 85140 Saint Martin des Noyers (FR)
(74) Mandataire: Bonnetat, Christian

(56) Documents cités:
- FR-A- 774 831
- GB-A- 2 313 030
- US-A- 3 571 964
- US-A- 5 987 804

## Description

La présente invention concerne un support pour cannes à pêche destiné à la pêche au poser et généralement appelé "rod pod" dans la technique. Bien que pouvant être utilisé pour toutes les pêches au poser, un tel support est particulièrement adapté à la pêche de poissons tels que la carpe, le barbeau, le sandre, le silure, le bar, etc ...

De façon connue, les cannes à pêche destinées à être supportées par un tel support sont chacune équipées d'un moulinet sur lequel est enroulée une ligne à pêche, dont la partie distale passe à travers des anneaux répartis le long desdites cannes et porte un appât à son extrémité libre. En action de pêche, le pêcheur lance lesdites lignes à l'aide desdites cannes, de façon que les lignes se dévident des moulinets et prolongent les cannes jusqu'aux emplacements de la rivière, de l'étang, de la mer, etc ... auxquels le pêcheur désire placer lesdits appâts.

Un tel support connu comporte un bâti de support pourvu d'un piètement, une barre d'appui arrière montée sur ledit bâti et apte à supporter transversalement la partie de talon d'au moins une canne à pêche et une barre d'appui avant, également montée sur ledit bâti, apte à supporter transversalement la partie intermédiaire de ladite canne à pêche. De telles barres d'appui, voir par exemple le document GB-A-2313030, sont généralement appelées "buzz bars" dans la technique.

Dans un support de ce type connu, les barres d'appui avant et arrière sont au moins approximativement identiques et, lorsque plusieurs cannes à pêche sont supportées par un même support, celles-ci sont disposées sensiblement parallèlement les unes aux autres sur ce dernier. Il en résulte que, lorsque les lignes des différentes cannes sont tendues de la façon décrite ci-dessus, soit lesdites lignes sont sensiblement parallèles, rapprochées et en prolongement rigoureux desdites cannes, soit elles s'écartent les unes des autres et forment un angle obtus avec les cannes respectives. Dans le premier cas, le pêcheur ne peut prospecter qu'une étroite bande d'eau, alors que dans le second, les lignes ne pêchent pas de façon optimale, puisqu'elles ne sont pas alignées avec les cannes respectives.

La présente invention a pour objet de remédier à cet inconvénient.

A cette fin, selon l'invention et conformément à la revendication 1, le support de canne à pêche pour la pêche au poser comportant :
- un bâti de support ;
- une barre d'appui arrière, montée sur ledit bâti et apte à supporter transversalement la partie de talon d'au moins une canne à pêche ; et
- une barre d'appui avant, montée sur ledit bâti et apte à supporter transversalement la partie intermédiaire de ladite canne à pêche,
est remarquable en ce que ladite barre d'appui avant est courbe avec sa concavité tournée vers ladite barre d'appui arrière.

Ainsi, il est possible de disposer lesdites cannes en éventail sur le support, de façon à prospecter un large secteur d'eau avec toutes les lignes tendues en prolongement rigoureux des cannes, sans pour autant augmenter exagérément la longueur de ladite barre d'appui avant.

La longueur de ladite barre d'appui avant courbe peut être fixe. Cependant, notamment si le support est prévu pour porter plusieurs cannes, il est préférable que la longueur de ladite barre d'appui avant courbe soit réglable. A cet effet, elle peut être constituée d'au moins deux éléments courbes emboîtés de façon télescopique et des moyens commandables peuvent être prévus pour solidariser et désolidariser lesdits éléments courbes l'un de l'autre. Dans un mode de réalisation avantageux, ladite barre d'appui avant courbe comporte une partie médiane fixe et deux parties latérales, opposées par rapport à ladite partie médiane fixe et respectivement emboîtées de façon télescopique dans cette dernière.

On remarquera que, dans le support pour cannes à pêche selon l'invention, puisque ces dernières sont disposées en éventail, il est possible de réduire fortement la longueur de la barre d'appui arrière, cette longueur étant alors très inférieure à celle de ladite barre d'appui avant.

Ladite barre d'appui arrière peut être rectiligne, mais de préférence elle est courbe et sa convexité est tournée vers ladite barre d'appui avant. De plus, ladite barre d'appui arrière, qu'elle soit rectiligne ou courbe, peut être de longueur fixe ou réglable. Dans ce dernier cas, elle peut, tout comme la barre d'appui avant, comporter au moins deux éléments emboîtés de façon télescopique.

Les figures du dessin annexé feront bien comprendre comment l'invention peut être réalisée. Sur ces figures, des références identiques désignent des éléments semblables.

La figure 1 est une vue en perspective schématique d'un premier mode de réalisation du support pour cannes à pêche conforme à la présente invention.

La figure 2 est une vue de dessus schématique de ce premier mode de réalisation.

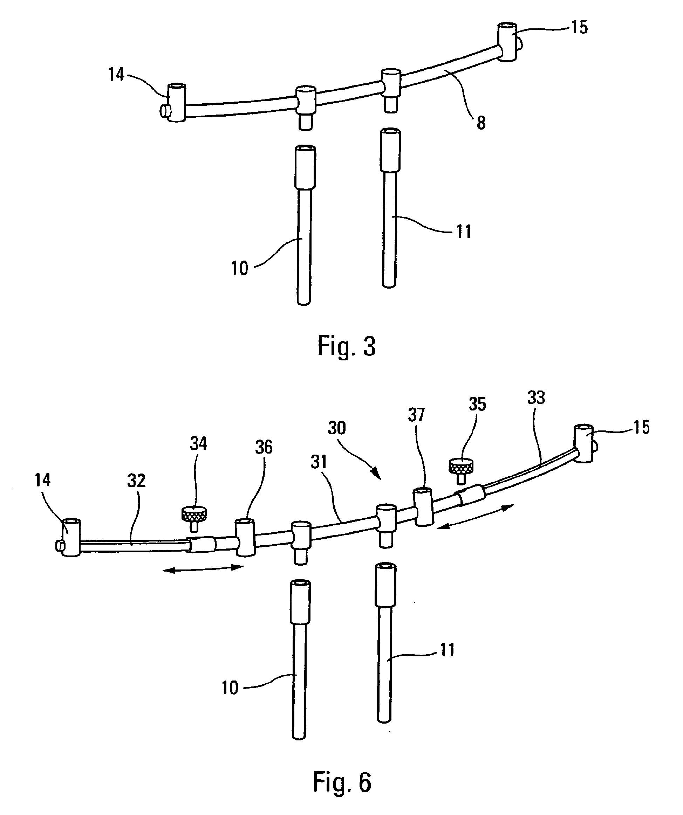

La figure 3 est une vue éclatée d'un exemple de barre d'appui avant pour ledit premier mode de réalisation.

La figure 4 est une vue en perspective schématique d'un second mode de réalisation du support pour cannes à pêche conforme à la présente invention.

La figure 5 est une vue de dessus schématique de ce second mode de réalisation.

La figure 6 est une vue éclatée d'un exemple de barre d'appui avant pour ledit second mode de réalisation.

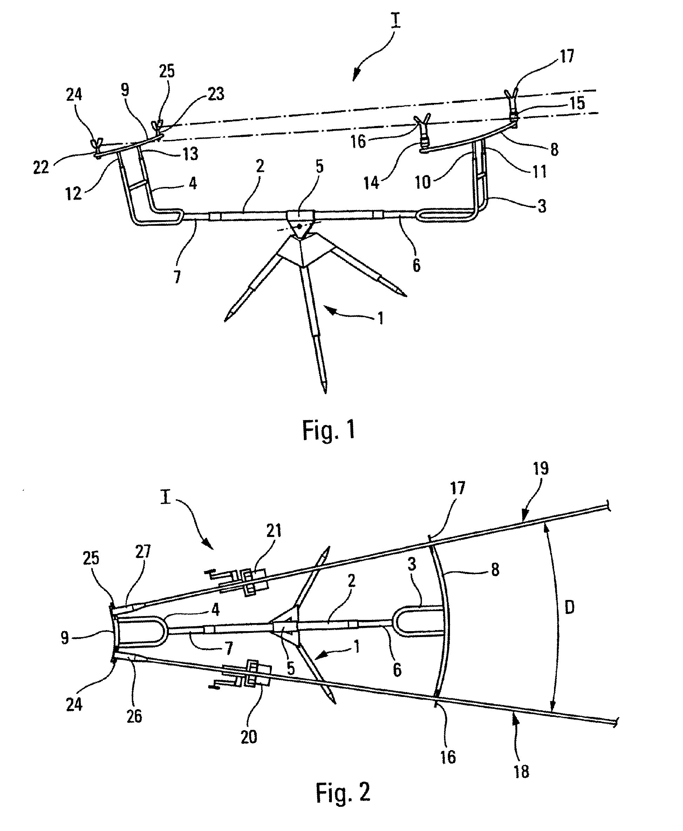

L'exemple de réalisation I de support pour cannes à pêche selon l'invention, montré par les figures 1 et 2, comporte un bâti de support comprenant un piètement 1, par exemple du type trépied, une poutre télescopique 2 et des fourches 3, 4 recourbées vers le haut.

La poutre télescopique 2 est articulée, par sa partie médiane, sur le piètement 1 grâce à une articulation 5, de type rotule à friction réglable, et les fourches 3 et 4 sont solidaires d'embouts respectifs 6, 7 emboîtés de façon télescopique dans les extrémités creuses de la poutre 2.

Les parties recourbées des fourches 3 et 4 sont au moins sensiblement orthogonales à ladite poutre 2 et portent, à leurs extrémités libres, respectivement une barre d'appui avant 8 et une barre d'appui arrière 9. A cette dernière fin, la barre d'appui avant 8 et la barre d'appui arrière 9 sont par exemple solidaires de tiges 10, 11 ou 12, 13, respectivement, aptes à être introduites et fixées dans les parties recourbées creuses de la fourche 3 ou de la fourche 4.

Dans le mode de réalisation I :
- la barre d'appui avant 8 est courbe avec sa concavité tournée vers la barre d'appui arrière 9 ;
- la barre d'appui arrière 9 est courbe avec sa convexité tournée vers la barre d'appui avant 8 ;
- la longueur de ladite barre d'appui avant courbe 8 est fixe ;
- la longueur de ladite barre d'appui arrière courbe 9 est fixe ;
- chacune desdites barres d'appui avant et arrière 8 et 9 est symétrique par rapport à la poutre 2 (voir la figure 2) ;
- la longueur de ladite barre d'appui arrière 9 est plus petite que la longueur de ladite barre d'appui avant 8 (sur la figure 2, on peut vérifier que la longueur de la barre d'appui arrière 9 est plus de deux fois inférieure à la longueur de la barre d'appui avant 8) ; et
- la barre d'appui arrière 9 présente une structure identique à celle de la barre d'appui avant 8.

A chacune des deux extrémités de la barre d'appui avant 8 est monté un embout 14 ou 15 servant de base à une fourchette 16 ou 17, apte à supporter la partie intermédiaire d'une canne à pêche 18 ou 19, transversalement à ladite barre d'appui avant 8 (sur la figure 1, à des fins de clarté, les cannes à pêche 18 et 19 ne sont représentées que par un trait en tirets mixtes). Chacune des cannes 18 et 19 est équipée d'un moulinet 20 ou 21.

De même, à chacune des deux extrémités de la barre d'appui arrière 9 est monté un embout 22 ou 23 servant de base à une fourchette 24 ou 25, apte à supporter le talon 26 ou 27 des cannes à pêche 18 et 19, celles-ci étant transversales à ladite barre d'appui arrière 9.

On voit ainsi, comme cela est illustré par la figure 2, que, sur le support I, les deux cannes 18 et 19 peuvent être montées en éventail, en faisant entre elles un angle de divergence D.

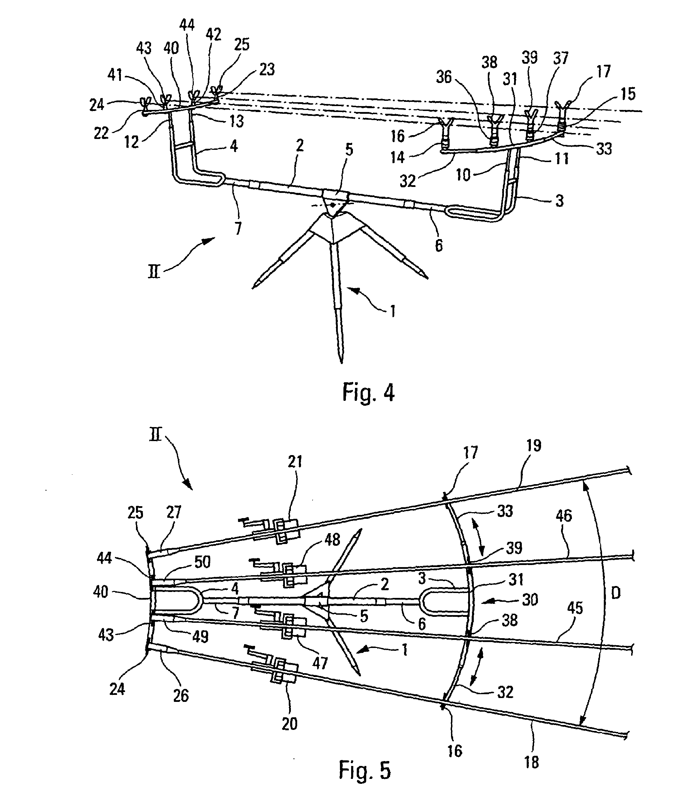

Dans le mode de réalisation II du support de canne à pêche selon l'invention, montré par les figures 4 et 5, on retrouve les éléments 1 à 7 et 10 à 27 décrits en regard des figures 1 et 2.

Par rapport au mode de réalisation I, le mode de réalisation II comporte les modifications suivantes :
- la barre d'appui avant courbe 8, de longueur fixe, est remplacée par la barre d'appui avant courbe 30, de disposition semblable mais de longueur réglable, qui comporte une partie médiane courbe fixe 31, solidaire des tiges 10 et 11, et deux parties latérales courbes 32 et 33, opposées par rapport à ladite partie médiane fixe 31 et respectivement emboîtées de façon télescopique dans cette dernière. Des vis de serrage 34 et 35 permettent de fixer en position les parties latérales courbes 32 et 33 par rapport à la partie médiane fixe 31. A leurs extrémités libres, les parties latérales courbes 32 et 33 portent respectivement les embouts 14 ou 15 et les fourchettes 16 ou 17. Par ailleurs, la partie médiane fixe porte deux embouts intermédiaires supplémentaires 36 et 37, semblables aux embouts 14 et 15, pour servir de base à des fourchettes intermédiaires supplémentaires 38, 39, respectivement semblables aux fourchettes 1 6 et 17 ; et
- la barre d'appui arrière courbe 9 est remplacée par la barre d'appui arrière courbe 40, de disposition semblable et de longueur également fixe, portant les embouts 22 et 23 et les fourchettes 24, 25 à ses extrémités libres, ainsi que deux embouts supplémentaires intermédiaires 41 et 42, semblables aux embouts 22 et 23, pour servir de base à des fourchettes intermédiaires supplémentaires 43, 44, respectivement semblables aux fourchettes 24 et 25.

On comprendra aisément qu'ainsi il est possible de monter en éventail sur le support II, en position intermédiaire par rapport aux cannes 18 et 19, deux cannes supplémentaires 45 et 46 équipées respectivement de moulinets 47 et 48 (comme cela est représenté sur la figure 5) avec leurs talons 49, 50 dans les fourchettes 43, 44 et leur partie intermédiaire dans les fourchettes 38, 39. De plus, grâce à la barre d'appui avant courbe 30, de longueur réglable comme indiqué par les flèches des figures 5 et 6, l'angle d'ouverture D dudit éventail, ainsi que les angles entre les cannes 18, 45 d'une part et 19, 46, d'autre part, sont réglables.

Bien entendu, quoique dans les supports I et II conformes à la présente invention, décrits ci-dessus, on ait prévu des barres d'appui arrière 9, 40 de longueur fixe, il est évident que ces barres d'appui arrière pourraient présenter une structure télescopique semblable à celle de la barre d'appui avant 30 pour présenter une longueur variable.

## Revendications

1. Support de canne à pêche (I, II) pour la pêche au poser comportant :
- un bâti de support (1 à 4);
- une barre d'appui arrière (9, 40), montée sur ledit bâti (1 à 4) et apte à supporter transversalement la partie de talon (26, 27, 49, 50) d'au moins une canne à pêche (18, 19, 45, 46) ; et
- une barre d'appui avant (8, 30), montée sur ledit bâti (1 à 4) et apte à supporter transversalement la partie intermédiaire de ladite canne à pêche (18, 19, 45, 46),
**caractérisé en ce que** ladite barre d'appui avant (8, 30) est courbe avec sa concavité tournée vers ladite barre d'appui arrière (9, 40).

2. Support de canne à pêche selon la revendication 1,
**caractérisé en ce que** la longueur de ladite barre d'appui avant courbe (8) est fixe.

3. Support de canne à pêche selon la revendication 1,
**caractérisé en ce que** la longueur de ladite barre d'appui avant courbe (30) est réglable.

4. Support de canne à pêche selon la revendication 3,
**caractérisé en ce que** ladite barre d'appui avant courbe (30) est constituée d'au moins deux éléments courbes (31, 32, 33) emboîtés de façon télescopique et **en ce que** sont prévus des moyens commandables (34, 35) pour solidariser et désolidariser lesdits éléments courbes l'un de l'autre.

5. Support de canne à pêche selon la revendication 4,
**caractérisé en ce que** ladite barre d'appui avant courbe (30) comporte une partie médiane fixe (31) et deux parties latérales (32, 33) opposées par rapport à ladite partie médiane fixe et respectivement emboîtées de façon télescopique dans cette dernière.

6. Support de canne à pêche selon l'une quelconque des revendications 1 à 5,
**caractérisé en ce que** ladite barre d'appui arrière (9, 40) a une longueur inférieure à celle de ladite barre d'appui avant courbe (8, 30).

7. Support de canne à pêche selon l'une quelconque des revendications 1 à 6,
**caractérisé en ce que** ladite barre d'appui arrière (9, 40) est courbe avec sa convexité tournée vers ladite barre d'appui avant (8, 30).

8. Support de canne à pêche selon la revendication 7,
**caractérisé en ce que** la longueur de ladite barre d'appui arrière courbe (9, 40) est fixe.

9. Support de canne à pêche selon la revendication 7,
**caractérisé en ce que** la longueur de ladite barre d'appui arrière courbe est réglable.

## Claims

1. Fishing rod support (I, II) for bottom-fishing, comprising:
- a support stand (1 to 4)
- a rear supporting bar (9, 40), mounted on the said stand (1 to 4) and capable of transversely supporting the butt part (26, 27, 49, 50) of at least one fishing rod (18, 19, 45, 46); and
- a front supporting bar (8, 30), mounted on the said stand (1 to 4) and capable of transversely supporting the intermediate part of the said fishing rod (18, 19, 45, 46);
**characterized in that** the said front supporting bar (8, 30) is curved, with its concavity facing towards the said rear supporting bar (9, 40).

2. Fishing rod support according to Claim 1, **characterized in that** the length of the said curved front supporting bar (8) is fixed.

3. Fishing rod support according to Claim 1, **characterized in that** the length of the said curved front supporting bar (30) is adjustable.

4. Fishing rod support according to Claim 3, **characterized in that** the said curved front supporting bar (30) is constituted by at least two telescopically nested curved elements (31, 32, 33) and **in that** controllable means (34, 35) are provided for joining together the said curved elements and separating them one from the other.

5. Fishing rod support according to Claim 4, **characterized in that** the said curved front supporting bar (30) comprises a fixed middle part (31) and two side parts (32, 33) on opposite sides of the said fixed middle part and, in each case, telescopically nested in the latter.

6. Fishing rod support according to any one of Claims 1 to 5, **characterized in that** the said rear supporting bar (9, 40) has a length less than that of the said curved front supporting bar (8, 30).

7. Fishing rod support according to any one of Claims 1 to 6, **characterized in that** the said rear supporting bar (9, 40) is curved, with its convexity facing towards the said front supporting bar (8, 30).

8. Fishing rod support according to Claim 7, **characterized in that** the length of the said curved rear supporting bar (9, 40) is fixed.

9. Fishing rod support according to Claim 7, **characterized in that** length of the said curved rear supporting bar is adjustable.

## Patentansprüche

1. Angelrutenauflage (I, II) für die stille Fischerei, umfassend:
- ein Auflagegestell (1 bis 4);
- einen hinteren Stützstab (9, 40), der am Gestell (1 bis 4) montiert ist und geeignet ist, das hintere Ansatzteil (26, 27, 49, 50) von mindestens einer Angelrute (18, 19, 45, 46) quer zu halten; und
- einen vorderen Stützstab (8, 30), der an dem Gestell (1 bis 4) montiert ist und geeignet ist, den mittleren Teil der Angelrute (18, 19, 45, 46) quer zu halten;
**dadurch gekennzeichnet, dass** der vordere Stützstab (8, 30) gekrümmt ist, wobei seine Konkavität zu dem hinteren Stützstab (9, 40) hin gerichtet ist.

2. Angelrutenauflage nach Anspruch 1, **dadurch gekennzeichnet, dass** die Länge des gekrümmten vorderen Stützstabs (8) fest ist.

3. Angelrutenauflage nach Anspruch 1, **dadurch gekennzeichnet, dass** die Länge des gekrümmten vorderen Stützstabs (30) einstellbar ist.

4. Angelrutenauflage nach Anspruch 3, **dadurch gekennzeichnet, dass** der gekrümmte vordere Stützstab (30) aus mindestens zwei gekrümmten Elementen (31, 32, 33) gebildet ist, die auf teleskopische Weise ineinander gesteckt sind, und dass betätigbare Mittel (34, 35) vorgesehen sind, um die gekrümmten Elemente miteinander zu verbinden und voneinander zu trennen.

5. Angelrutenauflage nach Anspruch 4, **dadurch gekennzeichnet, dass** der gekrümmte vordere Stützstab (30) einen festen Mittelteil (31) und zwei Seitenteile (32, 33) umfasst, die in Bezug auf den festen Mittelteil einander gegenüberliegen und auf jeweils teleskopische Weise in den Letztgenannten geschoben sind.

6. Angelrutenauflage nach einem der Ansprüche 1 bis 5, **dadurch gekennzeichnet, dass** der hintere Stützstab (9, 40) eine Länge aufweist, die kleiner ist als jene des gekrümmten vorderen Stützstabs (8, 30).

7. Angelrutenauflage nach einem der Ansprüche 1 bis 6, **dadurch gekennzeichnet, dass** der hintere Stützstab (9, 40) gekrümmt ist, wobei seine Konvexität zum vorderen Stützstab (8, 30) hin gerichtet ist.

8. Angelrutenauflage nach Anspruch 7, **dadurch gekennzeichnet, dass** die Länge des gekrümmten hinteren Stützstabs (9, 40) fest ist.

9. Angelrutenauflage nach Anspruch 7, **dadurch gekennzeichnet, dass** die Länge des gekrümmten hinteren Stützstabs einstellbar ist.
